# EUROPÄISCHE PATENTSCHRIFT

(11) **EP 3 582 990 B1**
(45) Veröffentlichungstag und Bekanntmachung des Hinweises auf die Patenterteilung: **28.07.2021**
(21) Anmeldenummer: 18702126.6
(22) Anmeldetag: 16.01.2018
(51) Int. Cl.: B60K 7/00, B60K 17/14, F16H 57/035, F16H 7/08, F16H 7/02

(54) **FAHRZEUGANTRIEB**
VEHICLE DRIVE
ENTRAÎNEMENT DE VÉHICULE

(30) Priorität: 20.02.2017 DE 102017202646
(43) Veröffentlichungstag der Anmeldung: 25.12.2019
(73) Patentinhaber: ContiTech Antriebssysteme GmbH, 30165 Hannover (DE)
(72) Erfinder: FISS, Tim, 30519 Hannover (DE); FREIHEIT, Philipp, 30627 Hannover (DE); FRAMENT, Olivier, 93197 Zeitlarn (DE)
(74) Vertreter: Continental Corporation
(86) Internationale Anmeldenummer: PCT/EP2018/050934
(87) Internationale Veröffentlichungsnummer: WO 2018/149579

(56) Entgegenhaltungen:
- EP-A2- 1 906 052
- WO-A1-98/19875
- WO-A1-2010/095060
- WO-A1-2017/152290
- DE-A1-102015 205 273
- US-A1- 2011 011 656

## Beschreibung

Die Erfindung betrifft einen Fahrzeugantrieb mit mindestens einem an einem Fahrzeugrad vorgesehenen Antriebsmotor, der an Karosserie- oder Fahrwerk des Fahrzeugs drehfest abgestützt ist, vorzugsweise an der Radaufhängung, wobei der Antriebsmotor zur Übertragung des Antriebsdrehmomentes über mindestens eine Getriebestufe mit dem Fahrzeugrad verbunden ist.

Radantriebe für Fahrzeuge sind bekannt, beispielsweise als so genannte Radnabenantriebe, bei denen der Antrieb bzw. der Motor in die Radnabe eingebaut ist.

Die DE 10 2011 011 012 A1 offenbart ein Radnabenantrieb für ein Kraftfahrzeug mit vorzugsweise einen Elektromotor und einem integrierten Planetengetriebe, welches als Stufenplanetengetriebe ausgebildet ist und ein relativ großes Übersetzungsverhältnis aufweist.

Die DE 39 24 817 A1 offenbart einen Antrieb, insbesondere für Rollstühle oder dergleichen, bei dem der Antriebsmotor ebenfalls ab als Radnabenantrieb ausgebildet ist und ein mehrstufiges Planetengetriebe aufweist, welches eine Leistungsverzweigung beinhaltet.

Radnabenmotoren bieten durch den Wegfall mechanischer Übertragungselemente wie z.B. Wellen und Differential den Vorteil einer platzsparenden Bauweise. Somit können auch mechanische Übertragungsverluste minimiert und der Wirkungsgrad erhöht werden. Weiterhin kann durch die gezielte Regelung der einzelnen Motoren die Leistung variabel auf die Antriebsräder verteilt werden. Radnabenmotoren sind in Anwendungen ohne Getriebe oder in Kombination mit einem Planetengetriebe bekannt, welches Drehzahl und Drehmoment übersetzt.

Radnabenmotoren werden in Verbindung mit Elektromotoren häufig zum Antrieb von Rollstühlen oder elektrisch angetriebenen Fahrrädern (Pedelecs) eingesetzt. Teilweise sind Radnabenmotoren aber auch bei Flurförderfahrzeugen oder als Antriebe von LKW oder Bussen bekannt.

Im Pkw-Bereich haben sich Radnabenmotoren in größerer Stückzahl bisher nicht durchgesetzt. Wie nämlich bereits oben dargestellt, werden üblicherweise in Radnabenantrieben Planetengetriebe verwendet. Diese Planetengetriebe bestehen aus den üblichen Getriebebauteilen Sonnenrad, Steg bzw. Planetenträger, Planetenräder und Hohlrad und sind, da alle Zahnräder aus Metall gefertigt sind, relativ schwer. Dies begründet einem besonderen Nachteil der Radnabenmotoren, der darin besteht, dass durch die Erhöhung der ungefederten Masse des Rades die Fahreigenschaften des Fahrzeugs negativ beeinflusst werden und die Fahrwerke und Federungen für die Karosserie anders dimensioniert werden müssen.

Zwar wurden bereits Prototypen von PKW-Antrieben realisiert, bei denen Motoren und Getriebe in eine Verbundlenker-Hinterachse integriert und Getriebe und Elektromotor in einem Aluminiumgehäuse angeordnet sind. Eine im obigen Sinne ausreichende Gewichtsreduktion ist jedoch auch damit nicht zu erreichen.

Aus diesem Grunde werden Radnabenmotoren häufig bei Fahrzeugen verwendet, bei denen die Fahrdynamik keine so große Rolle spielt, wie etwa bei elektrisch angetriebenen Fahrzeugen für gehbehinderte Personen.

Für die Erfindung bestand also die Aufgabe, einen Fahrzeugantrieb bereitzustellen, dessen Anwendungsbereich auch auf Fahrzeuge ausgedehnt wird, für die bisherige Radantriebe aufgrund der Fahrdynamik nicht einzusetzen sind, der wenig Gewicht und somit wenig ungefederte Masse aufweist, wobei der Radantrieb außerdem leicht herzustellen und in bestehende Radsysteme einfach zu integrieren ist.

Gelöst wird diese Aufgabe durch die Merkmale des Hauptanspruchs. Weitere vorteilhafte Ausbildungen sind in den Unteransprüchen offenbart.

Dabei ist als Getriebestufe ein aus Riemenscheiben und einen Zugriemen gebildeter Zugriementrieb vorgesehen, der eine Antriebsriemenscheibe und eine Abtriebsriemenscheibe aufweist, in welche der Zugriemen reib- und/oder formschlüssig zur Übertragung eines Drehmoments und einer Drehzahl teilumlaufend eingreift, wobei die Antriebsriemenscheibe auf der Antriebswelle des Antriebsmotors angeordnet ist und die Abtriebsriemenscheibe am Fahrzeugrad angeordnet und mit dem Fahrzeugrad drehfest verbunden ist.

Die Übersetzung wird hierbei also durch einen Riementrieb realisiert, der in besonderer Weise zum Einbau in ein Fahrzeugrad angepasst ist. Neben der einfachen Bauweise und Montage eines solchen Riementriebs ergibt sich eine effektive Gewichtsreduktion und damit die Reduzierung der ungefederten Masse im oder am Rad.

Darüber hinaus lässt sich durch die im Riementrieb beliebig anpassbare Übersetzung auch die Baugröße des Elektromotors anpassen, das heißt in diesem Falle reduzieren. Es ist ohne Probleme möglich, eine sehr kleine Antriebsriemenscheibe mit einer großen Abtriebsriemenscheibe zu kombinieren und so ein sehr hohes Drehmoment aufzubringen oder, in umgekehrter Weise eine hohe Drehzahl zu erzeugen. Eine Steigerung des Antriebsdrehmomentes solcher Radantriebe ist damit ebenso erreichbar wie auch eine Steigerung des Wirkungsgrads.

Ein weiterer Vorteil ergibt sich dadurch, dass ein vollständiger Verzicht auf Schmiermittel für das Getriebe erreicht wird, wodurch sich die Wartung vereinfacht und eine sehr hohe Lebensdauer ohne Probleme erreicht wird.

Erfindungsgemäß ist der Antriebsmotor mit der Antriebsscheibe an einem Lenker des Fahrwerks bzw. der Antriebsachse befestigt.

Dadurch lässt sich konstruktiv in relativ einfacher Art die Befestigung des Antriebsmotors an die Achskonstruktion anpassen, wobei insbesondere bei der Anbringung an Lenkern im Fahrwerk auch noch ein günstiger Hebelarm gewählt werden kann der Fahrdynamik wenig beeinflusst.

Eine weitere vorteilhafte Ausbildung besteht darin, dass der Zugriementrieb mit einem festen Übersetzungsverhältnis ausgebildet ist. Dies ergibt eine besonders einfache Bauweise und benötigt wenig Bauraum.

Eine weitere vorteilhafte Ausbildung besteht darin, dass der Zugriementrieb als Zahnriemen ausgebildet ist. Zahnriemen können sehr hohe Kräfte formschlüssig übertragen und erzeugen keine Verluste durch Schlupfreibung.

Eine weitere vorteilhafte Ausbildung besteht darin, dass der Zugriementrieb als Keilriemen oder Keilrippenriemen ausgebildet ist. Dies wiederum vereinfacht die Bauweise der Riemenscheiben und reduziert die Baugröße weiter.

Eine weitere vorteilhafte Ausbildung für ein Fahrzeugrad mit einer topfförmigen Felge besteht darin, dass der Antriebsmotor im Wesentlichen innerhalb des freien Felgenvolumens angeordnet ist. Durch eine solche Ausbildung ist es möglich, Teile des Radantriebs im Hohlraum der Felge bzw. des Rades zu "verstecken", so dass insgesamt mehr nutzbarer Raum für die Karosserie zur Verfügung steht.

Erfindungsgemäß ist die Abtriebsriemenscheibe mit der Nabe oder der Felge des Fahrzeugrads verbunden oder darin integriert. Auch dies reduziert die Baugröße des Radantriebs und führt dazu, dass zum Beispiel die Fahrzeugbreite reduziert werden kann.

Erfindungsgemäß weist der Zugriementrieb eine Spanneinrichtung auf, vorzugsweise eine lastabhängige Spanneinrichtung für den Zugriemen. Dies reduziert den Wartungsaufwand bei Zugriementrieben, da durch eine Spanneinrichtung kein Nachspannen oder nur ein Nachspannen in sehr großen Zeitabständen erforderlich ist. Insbesondere bei wechselnden Drehrichtungen ist eine solche Spanneinrichtung vorteilhaft, etwa um jeden Schlupf zu vermeiden.

Eine weitere vorteilhafte Ausbildung besteht darin, dass eine lastabhängige Spanneinrichtung für den Zugriemen vorgesehen ist, bei der eine erste Spannrolle dem Lasttrum und eine zweite Spannrolle dem Leertrum des Zugriemens zugeordnet sind, wobei die Spannrollen über eine Pendelstütze oder über ein Koppelglied miteinander so verbunden sind, dass durch ein unter Antriebslast erfolgendes Verschwenken der auf dem Lasttrum abrollenden ersten Spannrolle die auf dem Leertrum abrollende zweite Spanrolle verschwenkbar und im Sinne einer Erhöhung der Riemenspannung dem Leertrum zustellbar ist.

Insbesondere dann, wenn in vorteilhafter Weise die Spannrollen als Rückenrollen ausgebildet sind, ergibt sich eine Spanneinrichtung die sehr wenig Bauraum erfordert und in derselben Ebene des Zugriementriebes angeordnet werden kann. Ein Nachspannen ist damit auch nicht erforderlich, da durch die Zugkraft im Antriebsstrang automatisch der Riementrieb einer Spannung unterworfen wird, die für die Übertragung des Drehmomentes ausreichend bemessen ist. Ähnliche lastabhängige Spanneinrichtungen sind beispielsweise offenbart in der DE 10 2010 060703 A1 und der DE 10 2010 060705 A1, auf die hier vollinhaltlich Bezug genommen wird.

Eine weitere vorteilhafte Ausbildung besteht darin, dass der Zugriementrieb in einem Gehäuse angeordnet ist. Dies schützt gerade bei Fahrzeugen im normalen Straßenverkehr gegen Verschmutzungen der Zugriementriebe.

Für den Antrieb eines Fahrzeugs, welches einen möglichst großen Nutzraum aufweist ist, der z.B. durch Motorraum oder Getriebetunnel etc. nicht reduziert werden soll, ist es denkbar, dass ein Elektromotor als Antriebsmotor vorgesehen ist. Die Antriebsmotoren lassen sich dann zusammenschalten und stellen genügend Leistung bereit, um das Fahrzeug sicher und schnell anzutreiben.

Anhand eines Ausführungsbeispiels soll die Erfindung näher erläutert werden. Es zeigen
Fig. 1 einen erfindungsgemäßen Fahrzeugantrieb in Form einer Prinzipskizze,
Fig. 2 eine andere Ausführungsform eines erfindungsgemäßen Fahrzeugantrieb in Form einer Prinzipskizze,
Fig. 3 eine weitere Ausführungsform eines erfindungsgemäßen Fahrzeugantrieb in Form einer Prinzipskizze,
Fig. 4 den Fahrzeugantrieb gemäß Figur 3 in perspektivischer Ansicht.

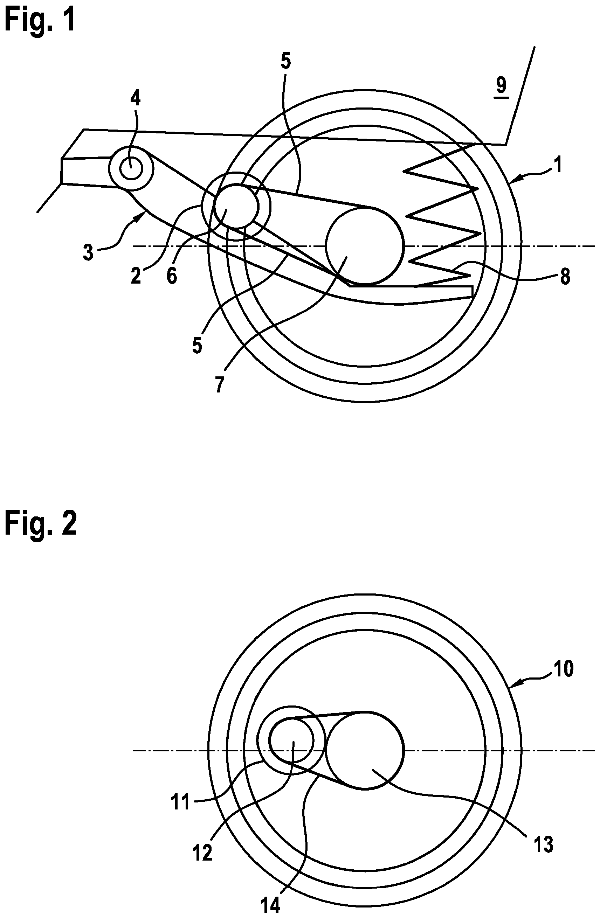

Fig. 1 zeigt in Form einer Prinzipskizze einen erfindungsgemäßen Fahrzeugantrieb eines hier nicht näher dargestellten Fahrzeugs, mit einen an einem Fahrzeugrad 1 vorgesehenen Antriebsmotor 2, der am Fahrwerk des Fahrzeugs drehfest abgestützt ist, hier an einem Lenker 3 des Fahrwerks bzw. der Antriebsachse 4 schwenkbar befestigt ist.

Der Antriebsmotor 2 ist zur Übertragung des Antriebsdrehmomentes über eine Getriebestufe mit dem Fahrzeugrad verbunden, nämlich über einen aus Riemenscheiben 6, 7 und einen Zugriemen 5 gebildeten Zugriementrieb. Der Antriebsmotor ist dabei auf seiner hier nicht näher dargestellten Antriebswelle mit einer Antriebsriemenscheibe 6 versehen, während das Rad 1 an eine Abtriebsriemenscheibe 7 aufweist und mit seiner Nabe am Lenker 3 befestigt und über die Schraubenfeder 8 an der hier nur skizzierten Karosserie 9 abgefedert ist.

Der Zugriemen 5 ist als Zahnriemen ausgebildet und greift formschlüssig zur Übertragung eines Drehmoments und einer Drehzahl teilumlaufend jeweils in die mit komplementären Verzahnungen versehene Antriebsriemenscheibe 6 und Abtriebsriemenscheibe 7 ein.

Der Zugriementrieb ist hier also mit einem festen Übersetzungsverhältnis ausgebildet.

Fig. 2 zeigt lediglich prinzipiell einen erfindungsgemäßen Fahrzeugantrieb für ein Fahrzeugrad 10 mit einer topfförmigen Felge, bei dem der Antriebsmotor 11 mit der Antriebsriemenscheibe 12 innerhalb des freien Felgenvolumens angeordnet ist. An der hier nicht näher dargestellten Radnabe des Rades 10 ist die Abtriebsriemenscheibe 13 angeordnet, wobei Antriebsriemenscheibe 12 und Abtriebsriemenscheibe 13 mit dem Zugriemen 14 einen Zugriementrieb bilden.

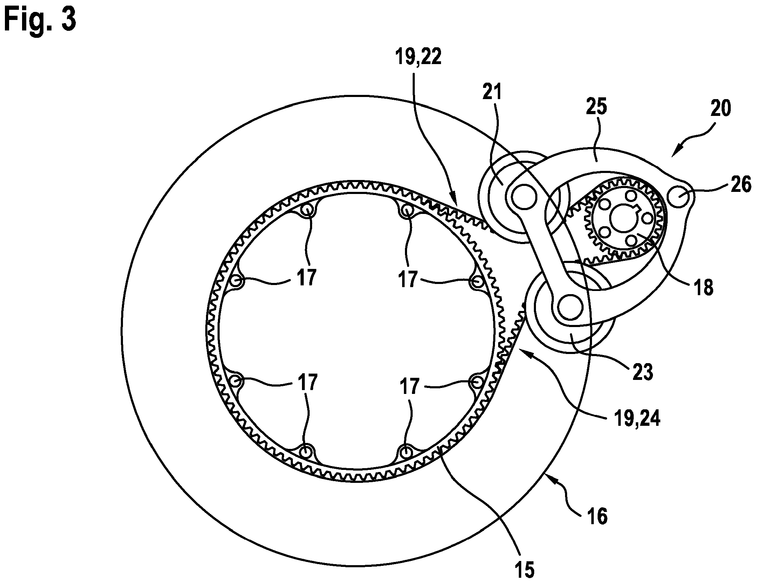

Fig.3 zeigt ebenfalls prinzipiell einen erfindungsgemäßen Fahrzeugantrieb, bei dem die Abtriebsriemenscheibe 15 ringförmig ausgebildet und mit der Felge eines Fahrzeugrads 16 über eine Reihe von Schraubverbindungen 17 verbunden ist. Antriebsriemenscheibe 18 und Abtriebsriemenscheibe 15 sind mit einer Verzahnung versehen und bilden auch hier zusammen mit dem Zahnriemen 19 einen Zugriementrieb. Der Motor und damit die Antriebsriemenscheibe 18 drehen in diesem Falle im Uhrzeigersinn, so dass sich das Lasttrum 22 und das Leertrum 24 ergibt..

Der Zugriementrieb weist hier eine lastabhängige Spanneinrichtung 20 für den Zugriemen auf. Die Spanneinrichtung für den Zugriemen/Zahnriemen 19 weist eine erste und als Rückenrolle ausgebildete Spannrolle 21 auf, die dem Lasttrum 22 des Zugriemens 19 zugeordnet ist sowie eine zweite Spannrolle 23, die dem Leertrum 24 des Zugriemens 19 zugeordnet ist.

Die Spannrollen 21, 23 sind über ein um eine Achse 26 schwenkbares Koppelglied 25 miteinander so verbunden sind, dass durch ein unter Antriebslast erfolgendes Verschwenken der auf dem Lasttrum 22 abrollenden ersten Spannrolle 21 die auf dem Leertrum 24 abrollende zweite Spanrolle 23 verschwenkbar und im Sinne einer Erhöhung der Riemenspannung dem Leertrum 24 zustellbar ist.

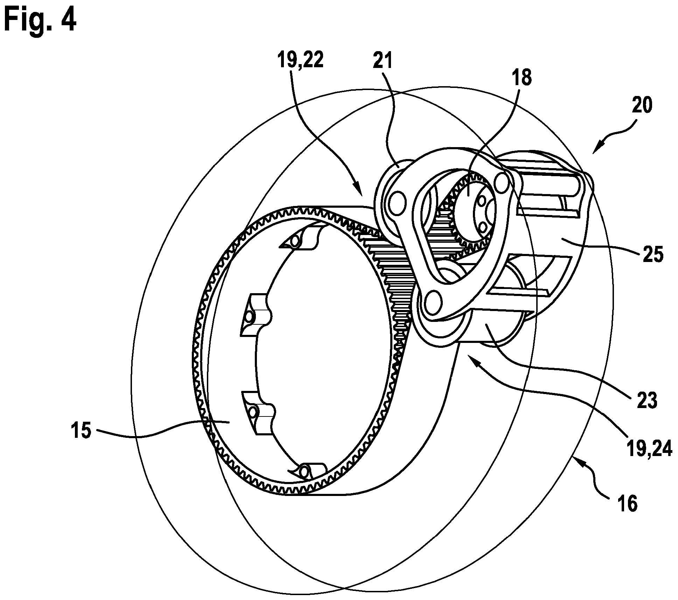

Fig. 4 zeigt der Deutlichkeit halber den in der Figur 3 dargestellten Fahrzeugantrieb noch einmal in einer perspektivischen Ansicht. Auch hier erkennt man die ringförmig an der Felge eines Fahrzeugrads 16 ausgebildete Abtriebsriemenscheibe 15.

Antriebsriemenscheibe 18 und Abtriebsriemenscheibe 15 sind mit einer Verzahnung versehen und bilden zusammen mit dem Zahnriemen 19 den Zugriementrieb. Die Antriebsriemenscheibe 18 dreht im Uhrzeigersinn, so dass sich das Laststrom 22 und das Leertrum 24 ergibt.

Die lastabhängige Spanneinrichtung 20 für den Zugriemen/Zahnriemen 19 weist zwei Spannrollen 21 und 23 auf, die dem Lasttrum 22 und dem Leertrum 24 des Zugriemens 19 zugeordnet sind.

Die Spannrollen 21, 23 sind über ein schwenkbares Koppelglied 25 miteinander so verbunden sind, dass durch ein unter Antriebslast erfolgendes Verschwenken der auf dem Lasttrum 22 abrollenden ersten Spannrolle 21 die auf dem Leertrum 24 abrollende zweite Spanrolle 23 verschwenkbar und im Sinne einer Erhöhung der Riemenspannung dem Leertrum 24 zustellbar ist.

### Bezugszeichenliste

### (Teil der Beschreibung)

- 1: Fahrzeugrad
- 2: Antriebsmotor
- 3: Lenker
- 4: Antriebsachse
- 5: Zugriemen
- 6: Antriebsriemenscheibe
- 7: Abtriebsriemenscheibe
- 8: Schraubenfeder
- 9: Karosserie
- 10: Fahrzeugrad
- 11: Antriebsmotor
- 12: Antriebsriemenscheibe
- 13: Abtriebsriemenscheibe
- 14: Zugriemen
- 15: Abtriebsriemenscheibe
- 16: Fahrzeugrad
- 17: Schraubverbindung
- 18: Antriebsriemenscheibe
- 19: Zahnriemen
- 20: Spanneinrichtung
- 21: Spannrolle, Rückenrolle
- 22: Lasttrum
- 23: Spannrolle, Rückenrolle
- 24: Leertrum
- 25: Koppelglied
- 26: Achse

## Patentansprüche

1. Fahrzeugantrieb mit einem an jedem Rad (1, 10, 16) mindestens einer Fahrzeugachse vorgesehenen Antriebsmotor (2, 11), der an Karosserie- oder Fahrwerk des Fahrzeugs drehfest abgestützt ist, vorzugsweise an der Radaufhängung, wobei der Antriebsmotor (2, 11) zur Übertragung des Antriebsdrehmomentes über mindestens eine Getriebestufe mit dem Fahrzeugrad (1, 10, 16) verbunden ist, wobei als Getriebestufe ein aus Riemenscheiben und einem Zugriemen (5, 14, 19) gebildeter Zugriementrieb vorgesehen ist, der eine Antriebsriemenscheibe (6, 12, 18) und eine Abtriebsriemenscheibe (7, 13, 15) aufweist, in welche der Zugriemen reib- und/oder formschlüssig zur Übertragung eines Drehmoments und einer Drehzahl teilumlaufend eingreift, wobei die Antriebsriemenscheibe (6, 12, 18) auf der Antriebswelle des Antriebsmotors (2, 11) angeordnet ist und die Abtriebsriemenscheibe (7, 13, 15) am Fahrzeugrad angeordnet und mit dem Fahrzeugrad drehfest verbunden ist, wobei der Antriebsmotor mit der Antriebsscheibe an einem Lenker (3) des Fahrwerks bzw. der Antriebsachse (4) befestigt ist, während die Abtriebsriemenscheibe (7, 13, 15) mit der Nabe oder der Felge des Fahrzeugrads verbunden oder darin integriert ist, **dadurch gekennzeichnet, dass** der Zugriementrieb eine Spanneinrichtung aufweist, vorzugsweise eine lastabhängige Spanneinrichtung (20) für den Zugriemen.

2. Fahrzeugantrieb nach Anspruch 1, bei dem der Zugriementrieb mit einem festen Übersetzungsverhältnis ausgebildet ist.

3. Fahrzeugantrieb nach einem der Ansprüche 1 oder 2, bei dem der Zugriementrieb als Zahnriemen (19) ausgebildet ist.

4. Fahrzeugantrieb nach einem der Ansprüche 1 oder 2, bei dem der Zugriementrieb als Keilriemen oder Keilrippenriemen ausgebildet ist.

5. Fahrzeugantrieb nach einem der Ansprüche 1 bis 4 für ein Fahrzeugrad mit einer topfförmigen Felge, bei dem der Antriebsmotor im Wesentlichen innerhalb des freien Felgenvolumens angeordnet ist.

6. Fahrzeugantrieb nach Anspruch 5, bei dem eine lastabhängige Spanneinrichtung (20) für den Zugriemen (19) vorgesehen ist, bei der eine erste Spannrolle (21) dem Lasttrum (22) und eine zweite Spannrolle (23) dem Leertrum (24) des Zugriemens (19) zugeordnet sind, wobei die Spannrollen (21, 23) über eine Pendelstütze oder über ein Koppelglied (25) miteinander so verbunden sind, dass durch ein unter Antriebslast erfolgendes Verschwenken der auf dem Lasttrum (22) abrollenden ersten Spannrolle (21) die auf dem Leertrum (24) abrollende zweite Spanrolle (23) verschwenkbar und im Sinne einer Erhöhung der Riemenspannung dem Leertrum (24) zustellbar ist.

7. Fahrzeugantrieb nach Anspruch 6, bei dem die Spannrollen (21, 23) als Rückenrollen ausgebildet sind.

8. Fahrzeugantrieb nach einem der Ansprüche 1 bis 7, bei dem der Zugriementrieb in einem Gehäuse angeordnet ist.

## Claims

1. Vehicle drive having a drive motor (2, 11) which is provided at each wheel (1, 10, 16) of at least one vehicle axle and which is supported rotationally fixedly on the body or chassis of the vehicle, preferably on the wheel suspension, wherein the drive motor (2, 11) is, for the transmission of the drive torque, connected via at least one transmission stage to the vehicle wheel (1, 10, 16), wherein, as a transmission stage, a traction belt drive formed from belt pulleys and from a traction belt (5, 14, 19) is provided, which traction belt drive has a drive belt pulley (6, 12, 18) and an output belt pulley (7, 13, 15) into which the traction belt engages in non-positively locking and/or positively locking fashion over a part of a circumference in order to transmit a torque and a rotational speed, wherein the drive belt pulley (6, 12, 18) is arranged on the drive shaft of the drive motor (2, 11) and the output belt pulley (7, 13, 15) is arranged on the vehicle wheel and is connected rotationally conjointly to the vehicle wheel, wherein the drive motor with the drive pulley is fastened to a strut (3) of the chassis or of the drive axle (4), whereas the output belt pulley (7, 13, 15) is connected to or integrated in the hub or the wheel rim of the vehicle wheel, **characterized in that** the traction belt drive has a tensioning device, preferably a load-dependent tensioning device (20), for the traction belt.

2. Vehicle drive according to Claim 1, in which the traction belt drive is configured with a fixed transmission ratio.

3. Vehicle drive according to either of Claims 1 and 2, in which the traction belt drive is configured as a toothed belt (19).

4. Vehicle drive according to either of Claims 1 and 2, in which the traction belt drive is configured as a V belt or poly-V belt.

5. Vehicle drive according to any of Claims 1 to 4 for a vehicle wheel with a pot-shaped wheel rim, in which the drive motor is arranged substantially within the free wheel rim volume.

6. Vehicle drive according to Claim 5, in which a load-dependent tensioning device (20) for the traction belt (19) is provided, in the case of which a first tensioning roller (21) is assigned to the load strand (22) and a second tensioning roller (23) is assigned to the return strand (24) of the traction belt (19), wherein the tensioning rollers (21, 23) are connected to one another by means of a pendulum support or by means of a coupling member (25) such that, as a result of a pivoting movement, which occurs under drive load, of the first tensioning roller (21) that rolls on the load strand (22), the second tensioning roller (23), which rolls on the return strand (24), can be pivoted and applied against the return strand (24) for the purposes of an increase of the belt tension.

7. Vehicle drive according to Claim 6, in which the tensioning rollers (21, 23) are configured as back rollers.

8. Vehicle drive according to any of Claims 1 to 7, in which the traction belt drive is arranged in a housing.

## Revendications

1. Entraînement de véhicule comprenant un moteur d'entraînement (2, 11) qui est prévu au niveau de chaque roue (1, 10, 16) d'au moins un essieu de véhicule et qui est en appui solidairement en rotation sur la carrosserie ou le mécanisme de roulement, de préférence sur la suspension de roue, le moteur d'entraînement (2, 11) étant relié à la roue de véhicule (1, 10, 16) par le biais d'au moins un étage de transmission pour transmettre le couple d'entraînement, un entraînement par courroie de traction formé de poulies et d'une courroie de traction (5, 14, 19) étant prévu comme étage de transmission et comportant une poulie de courroie d'entraînement (6, 12, 18) et une poulie de courroie de sortie (7, 13, 15) dans laquelle la courroie de traction s'engage sur une partie de la circonférence par friction et/ou complémentarité de formes pour transmettre un couple et une vitesse de rotation, la poulie d'entraînement (6, 12, 18) étant disposée sur l'arbre d'entraînement du moteur d'entraînement (2, 11) et la poulie de courroie de sortie (7, 13, 15) étant disposée sur la roue de véhicule et étant reliée solidairement en rotation à la roue de véhicule, le moteur d'entraînement étant fixé à une bielle (3) du mécanisme de roulement ou de l'essieu d'entraînement (4) par la poulie d'entraînement, tandis que la poulie de courroie de sortie (7, 13, 15) est reliée au moyeu ou à la jante de la roue de véhicule ou intégrée à l'intérieur, **caractérisé en ce que** l'entraînement par courroie de traction comporte un dispositif de tension, de préférence un dispositif de tension (20) dépendant de la charge qui est destiné à la courroie de traction.

2. Entraînement de véhicule selon la revendication 1, dans lequel l'entraînement par courroie de traction est conçu avec un rapport de transmission fixe.

3. Entraînement de véhicule selon l'une des revendications 1 et 2, dans lequel l'entraînement par courroie de traction est conçu sous la forme d'une courroie crantée (19).

4. Entraînement de véhicule selon l'une des revendications 1 et 2, dans lequel l'entraînement par courroie de traction est conçu sous la forme d'une courroie trapézoïdale ou d'une courroie trapézoïdale à nervures.

5. Entraînement de véhicule selon l'une des revendications 1 à 4 destiné à une roue de véhicule comprenant une jante en forme de coupelle dans laquelle le moteur d'entraînement est disposé sensiblement à l'intérieur du volume de jante libre.

6. Entraînement de véhicule selon la revendication 5, dans lequel un dispositif de tension (20) dépendant de la charge et destiné à la courroie de traction (19) est prévu, dans lequel un premier galet tendeur (21) est associé au brin de charge (22) et un deuxième galet tendeur (23) est associé au brin de retour (24) de la courroie de traction (19), les galets tendeurs (21, 23) étant reliés les uns aux autres par le biais d'un support pendulaire ou d'un élément d'accouplement (25) de telle sorte que le deuxième galet tendeur (23) roulant sur le brin de retour (24), peut pivoter, et être amené au brin de retour (24) au sens d'une augmentation de la tension de courroie, par un pivotement, effectué sous la charge d'entraînement, du premier galet tendeur (21) roulant sur le brin de charge (22).

7. Entraînement de véhicule selon la revendication 6, dans lequel les galets tendeurs (21, 23) sont conçus comme des galets arrière.

8. Entraînement de véhicule selon l'une des revendications 1 à 7, dans lequel l'entraînement par courroie de traction est disposé dans un boîtier.
